# EUROPÄISCHE PATENTSCHRIFT

(11) **EP 1 500 542 B1**
(45) Veröffentlichungstag und Bekanntmachung des Hinweises auf die Patenterteilung: **10.10.2007**
(21) Anmeldenummer: 04017516.8
(22) Anmeldetag: 23.07.2004
(51) Int. Cl.: B60J 10/02, B60J 10/00, B60J 10/08

(54) **Dichtungsanordnung, insbesondere zum Abdichten einer feststehenden Fensterscheibe eines Kraftfahrzeugs**
Seal arrangement, particularly for fixed vehicle window panes
Joint d'étanchéité, en particulier pour une vitre fixe de véhicule

(30) Priorität: 25.07.2003 DE 10334065
(43) Veröffentlichungstag der Anmeldung: 26.01.2005
(73) Patentinhaber: Metzeler Automotive Profile Systems GmbH, 88131 Lindau/Bodensee (DE)
(72) Erfinder: Krause, Fritz, 88145 Hergatz (DE)
(74) Vertreter: Schober, Christoph D.

(56) Entgegenhaltungen:
- DE-A- 3 333 672
- DE-A- 19 539 960
- DE-A- 19 845 422
- US-B1- 6 241 306
- PATENT ABSTRACTS OF JAPAN Bd. 1998, Nr. 11, 30. September 1998 (1998-09-30) & JP 10 151943 A (NISHIKAWA RUBBER CO LTD; SUZUKI MOTOR CORP), 9. Juni 1998 (1998-06-09)

## Beschreibung

Die Erfindung betrifft eine Dichtungsanordnung, die insbesondere zum Abdichten einer feststehenden Fensterscheibe eines Kraftfahrzeugs dient. Die Dichtungsanordnung ist mit einer Dichtung versehen, die aus einem elastisch verformbaren Werkstoff gefertigt ist. Zudem weist die Dichtungsanordnung ein starres Bauteil auf, das einen ersten Abschnitt, der sich parallel zu der Fensterscheibe erstreckt, und einen zweiten Abschnitt, der von dem ersten Abschnitt abgewinkelt ist, aufweist. Die Dichtung weist einen durch Extrudieren gefertigten und mit wenigstens einer Dichtlippe versehenen Dichtungsabschnitt und einen in die Fensterscheibe einfassenden und stoffschlüssig mit dem Dichtungsabschnitt verbundenen Halteabschnitt auf. Der Halteabschnitt ist mit einem Befestigungsmittel versehen, das mit dem ersten Abschnitt des starren Bauteils verbunden ist.

Kraftfahrzeuge sind häufig mit Türen versehen, die neben einer bewegbaren Fensterscheibe eine feststehende Fensterscheibe aufweisen. Die feststehende Fensterscheibe ist oftmals im Bereich der C-Säule des Kraftfahrzeugs angeordnet und durch einen Steg von der bewegbaren Fensterscheibe getrennt. Ein die feststehende Fensterscheibe einfassender Rahmen besteht üblicherweise aus einem elastomeren Werkstoff und dient vornehmlich dazu, die Fensterscheibe dichtend an der Tür zu befestigen. Ein solcher Profilrahmen wir in der DE 196 32 843 C1 beschrieben.

Eine Scheibeneinheit für Fenster von Kraftfahrzeugen, die eine aus Silikat- oder Acrylglas bestehende Scheibe und einen als Pressformteil ausgebildeten Rahmen, der den Rand der Scheibe an drei Seiten einfasst, aufweist, ist aus der DE 195 39 960 A1 bekannt. Der Rahmen setzt sich aus einem Primärteil und einem Sekundärteil zusammen. Das Primärteil besteht aus einem Werkstoff, der über eine ausreichend grosse Formfestigkeit verfügt, um einen zuverlässigen Formschluss zwischen dem Rahmen und der Scheibe zu bilden. Das Primärteil kann zu diesem Zweck aus Polypropylen, Polyurethan, Polyamid oder Polyvinylchlorid bestehen. Im Unterschied hierzu besteht das zur Abdichtung der Scheibe dienende Sekundärteil aus einem thermoplastischen Kunststoff, dessen Härte geringer als 90 Shore A ist. Das Primärteil ist mit einem Befestigungselement versehen, das dazu dient, die Scheibeneinheit an einem Bauteil zu befestigen. Das Befestigungselement wird hierfür in eine Ausnehmung des Bauteils eingesteckt und mit einer Sicherungsscheibe fixiert.

Darüber hinaus offenbart die gattungsgemäße DE 101 59 251 C1 eine Dichtungsanordnung, die neben einer eine feststehende Fensterscheibe einfassenden Scheibeneinfassung einen Dichtungsabschnitt aufweist, der dazu dient, eine die feststehende Fensterscheibe aufweisende Tür eines Kraftfahrzeugs gegenüber der Karosserie des Kraftfahrzeugs abzudichten. Der durch Extrudieren gefertigte und mit wenigstens einer Dichtlippe versehene Dichtungsabschnitt weist einen Befestigungsbereich auf, der durch eine kanalförmige Ausnehmung gebildet wird. Auf diese Weise ist es möglich, den Dichtungsabschnitt auf einen Flansch der Tür aufzustecken. Ein wirksamer Kraftschluss zwischen dem Dichtungsabschnitt und dem Flansch wird durch einen im Querschnitt annähernd U-förmigen Träger gewährleistet, der den Dichtungsabschnitt im Bereich der kanalförmigen Ausnehmung armiert. Die an den Dichtungsabschnitt angeformte Scheibeneinfassung ist mit einem Befestigungsmittel versehen, das die Form eines Hakens aufweist und die Scheibeneinfassung formschlüssig mit der Tür verbindet. Das Befestigungsmittel dient hauptsächlich dazu, eine exakte Lage der Scheibeneinfassung an der Tür sicherzustellen. Demgegenüber wird eine zuverlässige Befestigung der Scheibeneinfassung und des Dichtungsabschnitts durch das Aufstecken des Dichtungsabschnitts im Bereich der kanalförmigen Vertiefung auf den Flansch der Tür erreicht.

Eine Halterung für eine Fensterscheibe an einem eine Öffnung umgebenden Flansch eines Kraftfahrzeugs, die eine Dichtung aufweist, wird in der DE 33 33 672 A1 beschrieben. Die an dem Flansch befestigte Dichtung umfasst einen mit wenigstens einer Dichtlippe versehenen Dichtungsabschnitt und einen die Fensterscheibe einfassenden und mit dem Dichtungsabschnitt verbundenen Halteabschnitt. Der Halteabschnitt ist mittels einer Schweissverbindung mit einem aus einem Spreizclip und einem Spreizstift bestehenden Befestigungsmittel versehen. Das Befestigungsmittel dient dazu, den Halteabschnitt und damit die Dichtung an dem Flansch zu befestigen.

Weiterhin offenbart die JP 10151943 eine Dichtungsanordnung für die Windschutzscheibe eines Kraftfahrzeugs, die mit einer Dichtung und einem Rahmen versehen ist. Die Dichtung umfasst einen mit einer Dichtlippe versehenen Dichtungsabschnitt und ein eine Windschutzscheibe einfassendes und mit dem Dichtungsabschnitt verbundenes Formteil, das stoffschlüssig mit dem Dichtungsabschnitt verbunden ist.

Vor allem dann, wenn der Dichtungsabschnitt in Längsrichtung gekrümmt ist und beispielsweise eine bogenförmige Kontur aufweist, wie sie häufig im Bereich der C-Säule eines Kraftfahrzeugs vorzufinden ist, hat sich ein U-förmiger Querschnitt des den Dichtungsabschnitt im Befestigungsbereich armierenden Trägers als ungünstig erwiesen. Denn die für einen wirksamen Kraftschluss unerlässliche U-Form beeinflusst massgeblich den Krümmungsradius und damit die Formgebung des Dichtungsabschnitts.

Der Erfindung liegt die **Aufgabe** zugrunde, eine Dichtungsanordnung, die insbesondere zum Abdichten einer feststehenden Fensterscheibe eines Kraftfahrzeugs dient, dahingehend weiterzubilden, dass sich bei einer zuverlässigen Befestigung eine variable Formgebung eines Dichtungsabschnitts erzielen lässt.

Zur Lösung dieser Aufgabe wird eine Dichtungsanordnung mit den Merkmalen gemäß Anspruch 1 vorgeschlagen. Vorteilhafte Weiterbildungen der erfindungsgemässen Dichtungsanordnung stellen die Gegenstände der Ansprüche 2 bis 11 dar.

Die erfindungsgemässe Dichtungsanordnung macht sich die Erkenntnis zu eigen, dass es für eine zuverlässige Befestigung der Dichtung ausreichend ist, wenn die Dichtung überwiegend durch das an dem Halteabschnitt angeordnete Befestigungsmittel mit dem starren Bauteil verbunden ist. Danach ist es nicht erforderlich, den Dichtungsabschnitt mit einem Befestigungsbereich zu versehen, wie er in der DE 101 59 251 C1 beschrieben wird. Ein im Querschnitt U-förmiger Träger, der den Befestigungsbereich der bekannten Dichtungsanordnung armiert, ist entbehrlich. Der Dichtungsabschnitt der erfindungsgemässen Dichtungsanordnung lässt sich infolgedessen im Querschnitt nahezu beliebig ausgestalten. Die erfindungsgemässe Ausgestaltung stellt eine variable Formgebung des Dichtungsabschnitts sicher und gewährleistet somit, dass der Dichtungsabschnitt beispielsweise einen auf den jeweiligen Anwendungsfall abgestimmten Krümmungsradius aufweisen kann. Die der erfindungsgemässen Dichtungsanordnung immanente variable Formgebung ermöglicht zudem, die Lage der neutralen Faser des Dichtungsabschnitts auf vergleichsweise einfache Weise, beispielsweise durch eine Wärmebehandlung oder durch Strecken des Dichtungsabschnitts, zu variieren, um eine beanspruchungsgerechte und faltenfreie Gestaltung zu erreichen. Ferner vereinfacht die Anlagefläche die Montage der Dichtung und trägt zu einer exakten Anordnung des Dichtungsabschnitts an dem starren Bauteil bei.

Der Halteabschnitt ist durch einen beispielsweise aus Kunststoff oder Metall bestehenden Einleger armiert, der eine ausreichende Steifigkeit des Halteabschnitts sicherstellt und somit zu einer zuverlässigen Befestigung der Dichtung an dem starren Bauteil beiträgt.

Von Vorteil ist es, wenn das Befestigungselement ein Befestigungsclip ist. Denn ein Befestigungsclip gewährleistet zum einen eine einfache Montage und Demontage und zum anderen eine ausreichende Haltekraft, die zu einer zuverlässigen und langlebigen Befestigung der Dichtung an dem starren Bauteil beiträgt. Ein geeigneter Befestigungsclip wird beispielsweise in der deutschen Patentanmeldung 102 52 597 beschrieben.

Von Vorteil ist zudem, den Halteabschnitt mit einer Nut zu versehen, in welcher die Fensterscheibe eingesetzt ist. Auf diese Weise lässt sich die Fensterscheibe zuverlässig an dem Halteabschnitt befestigen. In einer bevorzugten Ausgestaltung der erfindungsgemässen Dichtungsanordnung ist der Einleger im Querschnitt annähernd Γ-förmig und umgreift die Nut, in welche die Fensterscheibe eingesetzt ist. Durch das Umgreifen der Nut ergibt sich eine feste Einspannung der Fensterscheibe an dem Halteabschnitt, die zu einer wirksamen Diebstahlsicherung beiträgt.

Der Dichtungsabschnitt ist bevorzugt frei von einem Träger. Im Bedarfsfall kann es allerdings sinnvoll sein, den Dichtungsabschnitt durch einen Träger zu armieren, der vorzugsweise I-förmig oder L-förmig ist. Der Träger verleiht dem Dichtungsabschnitt eine Steifigkeit, die verhindert, dass der Dichtungsabschnitt bei einer Beaufschlagung der an dem Dichtungsabschnitt angeordneten Dichtlippe, beispielsweise wenn die Dichtlippe beim Schliessen der Tür eines Kraftfahrzeugs an die Karosserie des Kraftfahrzeugs gedrückt wird, eine Veränderung seiner Lage erfährt. Bei einer L-förmigen Ausgestaltung ist der Träger sowohl in den inneren Schenkel als auch in den äusseren Schenkel eingebettet. Demgegenüber erstreckt sich der Träger bei einer I-förmigen Ausgestaltung ausschliesslich im Bereich des inneren Schenkels.

Um im Bedarfsfall eine in ästhetischer Hinsicht ansprechende optische Gestaltung zu erreichen, ist der Dichtungsabschnitt im Bereich des äusseren Schenkels zweckmässigerweise mit einer Zierleiste versehen. Die beispielsweise aus farbigem Kunststoff oder glänzendem Metall bestehende Zierleiste kann formschlüssig mit dem äusseren Schenkel verbunden sein, um eine einfache Montage zu gewährleisten.

Zweckmässig ist ferner, die Dichtlippe mit einer reibungsvermindernden Beflockung oder einer Beschichtung, beispielsweise einem Gleitlack, zu versehen, um störende Reibgeräusche zu verhindern. Die Dichtlippe kann unmittelbar nach der Extrusion des Dichtungsabschnitts mit der Beflockung oder der Beschichtung versehen werden, so dass, nachdem der Halteabschnitt mit dem Dichtungsabschnitt verbunden ist, keine in fertigungstechnischer Hinsicht aufwendige Nachbehandlung erforderlich ist. Im Bedarfsfall kann die Dichtlippe als Hohlkammerprofil ausgebildet sein.

In Hinsicht auf eine einfache und kostengünstige Fertigung ist der Dichtungsabschnitt vorteilhafterweise aus einem elastomeren Werkstoff, vorzugsweise einem thermoplastischen Elastomer (TPE) oder Ethylen-Propylen-Dien-Kautschuk (EPDM), extrudiert. Demgegenüber ist der Halteabschnitt zweckmässigerweise durch Spritzgiessen mit dem Dichtungsabschnitt verbunden.

Bevorzugt ist der Dichtungsabschnitt in Längsrichtung gekrümmt und weist zum Beispiel eine bogenförmige Kontur auf, die an die C-Säule eines Kraftfahrzeugs angepasst ist.

Einzelheiten und weitere Vorteile der erfindungsgemässen Dichtungsanordnung ergeben sich aus der nachfolgenden Beschreibung bevorzugter Ausführungsbeispiele. In den die Ausführungsbeispiele lediglich schematisch darstellenden Zeichnungen veranschaulichen im einzelnen:
- Fig. 1: eine Seitenansicht der Tür eines Kraftfahrzeugs;
- Fig. 2: einen Schnitt gemäss Linie II-II in Fig. 1, der eine erste Ausführungsform eines Dichtungsabschnitts zeigt;
- Fig. 3: einen Schnitt gemäss Fig. 2, der eine zweite Ausführungsform des Dichtungsabschnitts zeigt;
- Fig. 4: einen Schnitt gemäss Fig. 2, der eine dritte Ausführungsform des Dichtungsabschnitts zeigt;
- Fig. 5: einen Schnitt gemäss Fig. 2, der eine vierte Ausführungsform des Dichtungsabschnitts zeigt;
- Fig. 6: einen Schnitt gemäss Fig. 2, der eine fünfte Ausführungsform des Dichtungsabschnitts zeigt;
- Fig. 7: einen Schnitt gemäss Fig. 2, der eine sechste Ausführungsform des Dichtungsabschnitts zeigt, und
- Fig. 8: einen Schnitt gemäss Fig. 2, der eine siebte Ausführungsform des Dichtungsabschnitts zeigt.

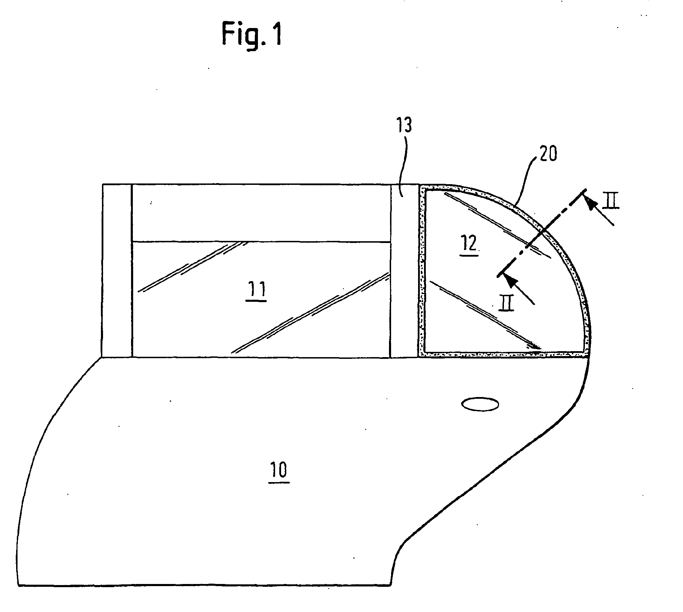

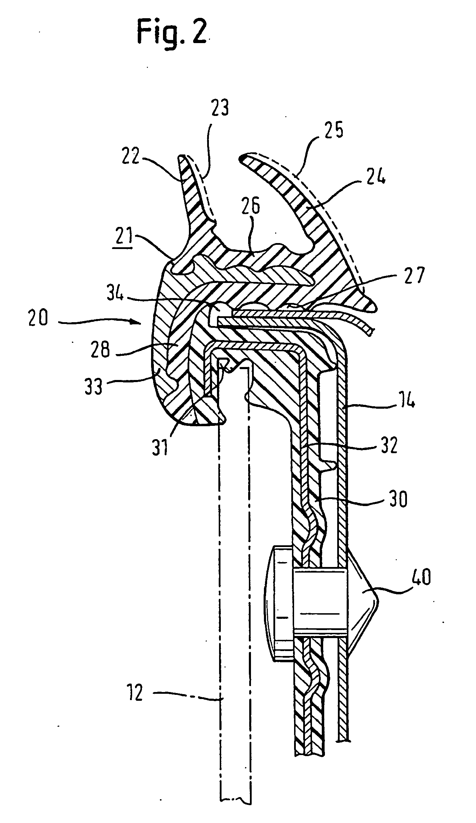

Die in Fig. 1 gezeigte Tür 10 eines Kraftfahrzeugs weist eine in vertikaler Richtung bewegbare und in einen nicht näher dargestellten Fensterschacht der Tür 10 versenkbare Fensterscheibe 11 auf. Zudem weist die Tür 10 eine feststehende Fensterscheibe 12 auf, die durch einen Steg 13 von der bewegbaren Fensterscheibe 11 getrennt ist und von einer Dichtung 20 eingefasst wird. Wie insbesondere aus Fig. 2 ersichtlich, setzt sich die Dichtung 20 aus einem mit Dichtlippen 22, 24 versehenen Dichtungsabschnitt 21 und einem die Fensterscheibe 12 einfassenden Halteabschnitt 30 zusammen. Der Halteabschnitt 30 weist eine Nut 31 auf, in welche die Fensterscheibe 12 eingesetzt ist. Zudem ist der Halteabschnitt 30 durch einen aus Kunststoff oder Metall bestehenden Einleger 32 armiert, der im Querschnitt annähernd Γ-förmig ist und die Nut 31 umgreift. An einem sich parallel zur Fensterscheibe erstreckenden Abschnitt des Einlegers 32 ist ein Befestigungsclip 40 angeordnet. Der Befestigungsclip verbindet den Halteabschnitt 30 mit einem Rahmen 14 der Tür 10.

Der Dichtungsabschnitt 21 ist aus einem elastomeren Werkstoff, beispielsweise EPDM, extrudiert und im Querschnitt annähernd winkelförmig ausgestaltet. An einem inneren Schenkel 26 sind die mit einer Beflockung 23, 25 versehenen Dichtlippen 22, 24 angeordnet. An einem äusseren Schenkel 28 ist der Halteabschnitt 30 befestigt. Der beispielsweise aus TPE bestehende Halteabschnitt 30 ist durch Spritzgiessen derart mit dem äusseren Schenkel 28 verbunden, dass zwischen dem inneren Schenkel 26 und dem Halteabschnitt 30 ein Freiraum 34 verbleibt. In den Freiraum 34 greift ein abgewinkelter Abschnitt des Rahmens 14 ein. Eine Anlagefläche 27, die der innere Schenkel 26 bildet, stützt den Dichtungsabschnitt 21 an dem abgewinkelten Abschnitt des Rahmens 14 ab.

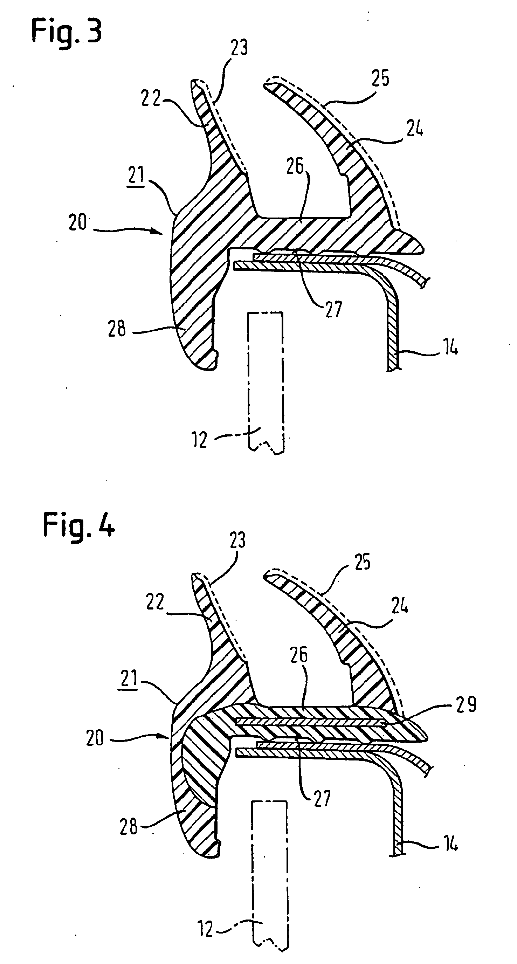

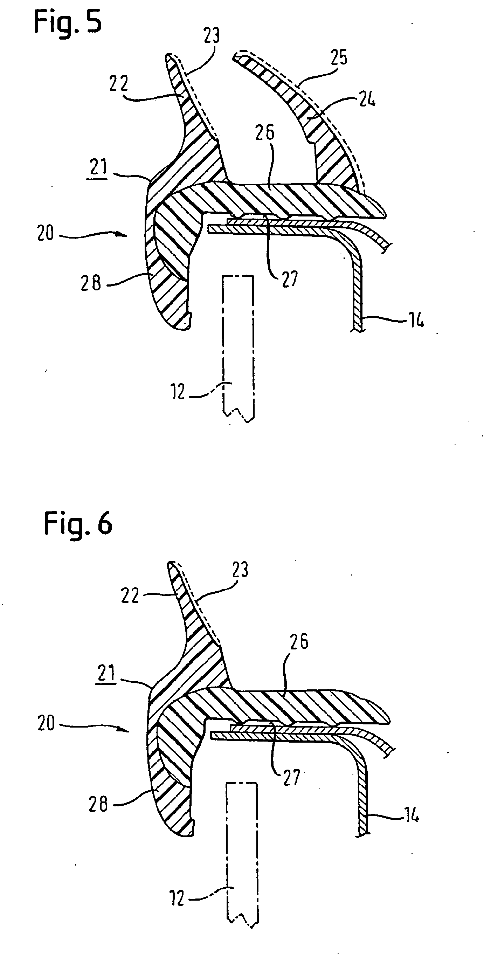

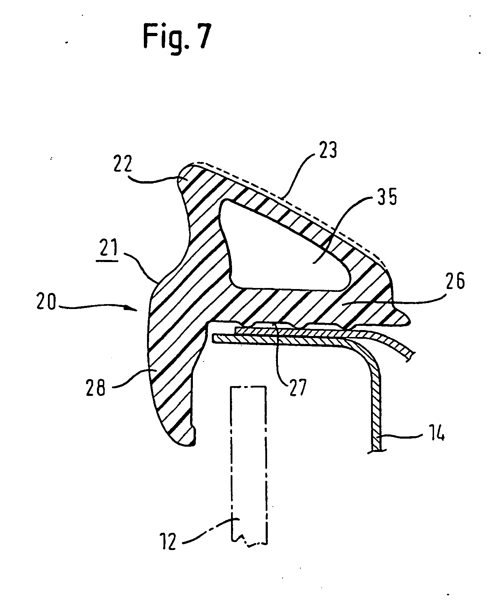

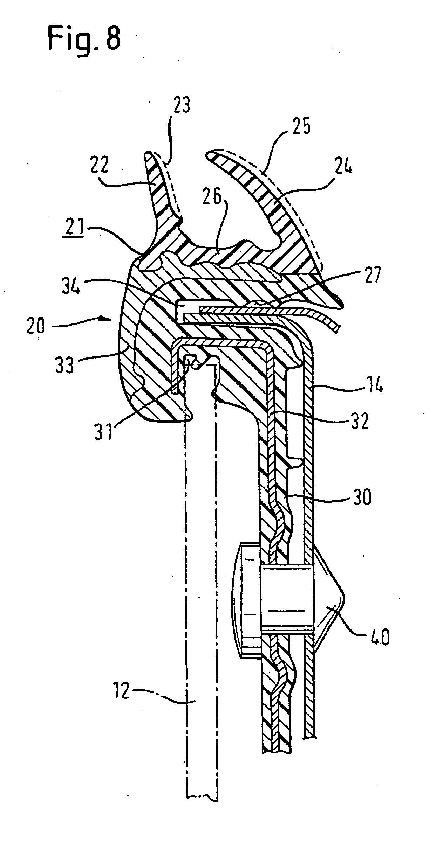

Die in den Fig. 2 und 8 gezeigte Ausführungsform des Dichtungsabschnitts 21 weist eine Zierleiste 33 auf, die im Bereich des äusseren Schenkels 28 angeordnet ist. Demgegenüber sind die in den Fig. 3 bis 7 gezeigten Ausführungsformen des Dichtungsabschnitts 21 ohne Zierleiste ausgebildet. Der in den Fig. 3, 7 und 8 gezeigte Dichtungsabschnitt 21 ist aus einem homogenen Werkstoff gefertigt, wohingegen die den Fig. 4 bis 6 gezeigten Ausführungsformen des Dichtungsabschnitts 21 aus einem heterogenen Werkstoff bestehen und beispielsweise durch Koextrusion gefertigt sind. So kann beispielsweise der innere Schenkel 26 aus einem Werkstoff bestehen, der eine vergleichsweise hohe Härte aufweist, um eine ausreichende Formstabilität des Dichtungsabschnitts 21 zu gewährleisten. Zu diesem Zweck kann der innere Schenkel 26 zudem durch einen I-förmigen Träger 29 armiert sein, wie in Fig. 4 zu erkennen ist. Der Dichtungsabschnitt 21 muss nicht notwendigerweise zwei Dichtlippen 22, 24 aufweisen. Vielmehr kann es im Bedarfsfall ausreichend sein, wenn nur eine Dichtlippe 22 vorhanden ist, wie in Fig. 6 zu erkennen ist. Darüber hinaus kann die Dichtlippe 22 je nach Anwendungsfall auch als Hohlkammerprofil ausgestaltet sein und eine Hohlkammer 35 aufweisen, die eine zuverlässige Dichtwirkung gewährleistet.

Die in Fig. 8 gezeigte Dichtung 20 weist einen Dichtungsabschnitt 21 auf, der im Querschnitt im wesentlichen eben ausgestaltet ist und demzufolge lediglich einen inneren Schenkel 26 aufweist. Der mit zwei Dichtlippen 22, 24 versehene Dichtungsabschnitt 21 ist an der den Dichtlippen 22, 24 abgewandten Seite des Schenkels 26 mit dem Halteabschnitt 30 verbunden. Der durch Spritzgiessen gefertigte Halteabschnitt 30 erstreckt sich in den Bereich, der bei den Ausführungsformen gemäss den Fig. 2 bis 7 durch den äusseren Schenkel 28 gebildet wird. Eine Zierleiste 33 ist danach unmittelbar an dem Halteabschnitt 30 befestigt.

Die zuvor beschriebene Dichtungsanordnung zum Abdichten der feststehenden Fensterscheibe 12 der Tür 10 zeichnet sich durch eine zuverlässige Befestigung der Dichtung 20 an dem Rahmen 14 aus. Grund hierfür ist der Befestigungsclip 40, der sowohl den Halteabschnitt 30 als auch den stoffschlüssig mit diesem verbundenen Dichtungsabschnitt 21 an dem Rahmen 14 befestigt. Demgegenüber trägt die an dem abgewinkelten Abschnitt des Rahmens 14 anliegende Anlagefläche 27 des inneren Schenkels 26 lediglich zum Ausrichten des Dichtungsabschnitts 21 gegenüber dem Rahmen 14 bei. Die Befestigung der Dichtung 20 an dem Rahmen 14 erfolgt demzufolge fast ausschliesslich durch den Befestigungsclip 40. Im Unterschied zu der aus der DE 101 59 251 C1 bekannten Dichtungsanordnung bedarf es demzufolge eines im Querschnitt U-förmigen Trägers für die Befestigung des Dichtungsabschnitts 21 an dem Rahmen 14 nicht. Vielmehr kann der Dichtungsabschnitt 21 ohne jedwede Armierung ausgestaltet werden, wie in den Fig. 2, 3 und 5 bis 8 ersichtlich. Sollte im Bedarfsfall dennoch eine Armierung erforderlich sein, um eine ausreichende Formstabilität des Dichtungsabschnitts 21 zu erreichen, ist es ausreichend, wenn die Armierung durch einen I-förmigen Träger gebildet wird, der sich ausschliesslich im Bereich des inneren Schenkels 26 erstreckt, wie aus Fig. 4 ersichtlich ist.

Auf Grund des Fehlens eines U-förmigen Trägers gewährleistet der Dichtungsabschnitt 21 eine variable Formgebung. Dies kommt vor allem dann zum Tragen, wenn der Dichtungsabschnitt 21 in Längsrichtung gekrümmt ist, wie aus Fig. 1 ersichtlich ist. Denn in diesem Fall lässt sich die Lage der neutralen Faser des Dichtungsabschnitts 21 ohne grösseren Aufwand gezielt auf die bogenförmige Kontur des Dichtungsabschnitts 21 abstimmen, beispielsweise durch eine Wärmebehandlung oder durch Strecken des Dichtungsabschnitts 21. Neben einer beanspruchungsgerechten Gestaltung ergibt sich somit nicht zuletzt auch ein in ästhetischer Hinsicht ansprechender faltenfreier Verlauf des Dichtungsabschnitts 21.

### Bezugszeichenliste

- 10: Tür
- 11: Fensterscheibe
- 12: Fensterscheibe
- 13: Steg
- 14: Rahmen

- 20: Dichtung
- 21: Dichtungsabschnitt
- 22: Dichtlippe
- 23: Beflockung
- 24: Dichtlippe
- 25: Beflockung
- 26: innerer Schenkel
- 27: Anlagefläche
- 28: äusserer Schenkel
- 29: Träger
- 30: Halteabschnitt
- 31: Nut
- 32: Einleger
- 33: Zierleiste
- 34: Freiraum
- 35: Hohlkammer
- 40: Befestigungsclip

## Patentansprüche

1. Dichtungsanordnung, insbesondere zum Abdichten einer feststehenden Fensterscheibe (12) eines Kraftfahrzeugs, mit
einer Dichtung (20), die aus einem elastisch verformbaren Werkstoff gefertigt ist, und
einem starren Bauteil (14), das einen ersten Abschnitt, der sich parallel zu der Fensterscheibe (12) erstreckt, und einen zweiten Abschnitt, der von dem ersten Abschnitt abgewinkelt ist, aufweist;
wobei die Dichtung (20) einen durch Extrudieren gefertigten und mit wenigstens einer Dichtlippe (22, 24) versehen Dichtungsabschnitt (21) und einen die Fensterscheibe (12) einfassenden und stoffschlüssig mit dem Dichtungsabschnitt (21) verbundenen Halteabschnitt (30) aufweist;
wobei der Halteabschnitt (30) mit einem Befestigungsmittel (40) versehen ist, das mit dem ersten Abschnitt des starren Bauteils (14) verbunden ist;
wobei der Dichtungsabschnitt (21) einen inneren Schenkel (26), an dem die Dichtlippe (22, 24) angeordnet ist, und einen äußeren Schenkel (28), der sich in einem Winkel zu dem inneren Schenkel (26) erstreckt und mit dem Halteabschnitt (30) verbunden ist, aufweist;
wobei der innere Schenkel (26) eine Anlagefläche (27) bildet, an welcher der Dichtungsabschnitt (21) an dem zweiten Abschnitt des starren Bauteils (14) abgestützt ist,
**dadurch gekennzeichnet, dass** der Halteabschnitt (30) durch einen Einleger (32) armiert ist, der sich zumindest entlang des ersten Abschnitts des starren Bauteils (14) erstreckt;
und dass der Dichtungsabschnitt (21) frei von einem im Querschnitt U-förmigen Träger ist.

2. Dichtungsanordnung nach Anspruch 1, **dadurch gekennzeichnet, dass** der Halteabschnitt (30) und das Befestigungsmittel (40) separat gefertigt sind.

3. Dichtungsanordnung nach Anspruch 1 oder 2, **dadurch gekennzeichnet, dass** das Befestigungsmittel ein Befestigungsclip (40) ist.

4. Dichtungsanordnung nach einem der Ansprüche 1 bis 3, **dadurch gekennzeichnet, dass** der Halteabschnitt (30) mit einer Nut (31) versehen ist, in welche die Fensterscheibe (12) eingesetzt ist.

5. Dichtungsanordnung nach Anspruch 4, **dadurch gekennzeichnet, dass** der Einleger (32) im Querschnitt annähernd Γ-förmig ist und die Nut (31) umgreift.

6. Dichtungsanordnung nach einem der Ansprüche 1 bis 5, **dadurch gekennzeichnet, dass** der Dichtungsabschnitt (21) durch einen Träger (29) armiert ist, der vorzugsweise I-förmig oder L-förmig ist.

7. Dichtungsanordnung nach einem der Ansprüche 1 bis 6, **dadurch gekennzeichnet, dass** der Dichtungsabschnitt (21) im Bereich des äußeren Schenkels (28) mit einer Zierleiste (33) versehen ist.

8. Dichtungsanordnung nach einem der Ansprüche 1 bis 7, **dadurch gekennzeichnet, dass** die Dichtlippe (22, 24) mit einer reibungsvermindernden Beflockung (23, 25) oder Beschichtung versehen ist.

9. Dichtungsanordnung nach einem der Ansprüche 1 bis 8, **dadurch gekennzeichnet, dass** der Dichtungsabschnitt (21) aus einem elastomeren Werkstoff, vorzugsweise einem thermoplastischen Elastomer oder Ethylen-Propylen-Dien-Kautschuk, extrudiert ist.

10. Dichtungsanordnung nach einem der Ansprüche 1 bis 9, **dadurch gekennzeichnet, dass** der Halteabschnitt (30) durch Spritzgiessen mit dem Dichtungsabschnitt (21) verbunden ist.

11. Dichtungsanordnung nach einem der Ansprüche 1 bis 10, **dadurch gekennzeichnet, dass** der Dichtungsabschnitt (21) in Längsrichtung gekrümmt ist.

## Claims

1. A weatherseal assembly particularly for sealing a fixed window pane (12) of a motor vehicle, comprising a weatherseal (20) made of an elastomeric material and a rigid component (14) having a first portion extending in parallel to the windowpane (12) and a second portion angled from the first portion, said weatherseal (20) comprising an extruded sealing portion (21) having at least one sealing lip (22, 24) and a mounting portion (30) enclosing said window pane (12) and integrally connected to said sealing portion (21), said mounting portion (30) having a fastening means (40) connected to the first portion of said rigid component (14), said sealing portion (21) comprising an inner leg (26) on which said sealing lip (22, 24) is arranged and an outer leg (28) connected to said mounting portion (30) and extending at an angle from the inner leg (26), said inner leg (26) defining a contact face (27) supporting said sealing portion (21) at the second portion of said rigid component (14), **characterized in that** said mounting portion (30) is reinforced by an insert (32) extending at least alongside the first portion of said rigid component (14) and **in that** said sealing portion (21) is free of a carrier having a U-shaped cross section.

2. The weatherseal assembly as set forth in claim 1, **characterized in that** the mounting portion (30) and the fastening means (40) are manufactured separately.

3. The weatherseal assembly as set forth in claim 1 or 2, **wherein** said fastening means is a clip fastener (40).

4. The weatherseal assembly as set forth in one of the claims 1 to 3, **wherein** said mounting portion (30) includes a groove (31) for insertion of said window pane (12).

5. The weatherseal assembly as set forth in claim 4, **wherein** said insert (32) has a substantially Γ-shaped cross-section and wherein said insert (32) clasps said groove (31).

6. The weatherseal assembly as set forth in one of the claims 1 to 5, **wherein** said sealing portion (21) is reinforced by a carrier (29) having a preferably I- or L-shaped cross-section.

7. The weatherseal assembly as set forth in one of the claims 1 to 6, **wherein** said sealing portion (21) comprises a trimming part (33) in the region of said outer leg (28).

8. The weatherseal assembly as set forth in one of the claims 1 to 7, **wherein** said sealing lip (22, 24) is finished with a friction-diminishing flaking (32, 35) or coating.

9. The weatherseal assembly as set forth in one of the claims 1 to 8, **wherein** said sealing portion (21) is extruded as an elastomer, preferably a thermoplastic elastomer (TPE) or EPDM rubber.

10. The weatherseal assembly as set forth in one of the claims 1 to 9, **wherein** said mounting portion (30) is joined to said sealing portion (21) by injection molding.

11. The weatherseal assembly as set forth in one of the claims 1 to 10, **wherein** said sealing portion (21) is curved longitudinally.

## Revendications

1. Agencement d'étanchéité, en particulier pour étancher une vitre de fenêtre fixe (12) d'un véhicule automobile, comprenant
un joint d'étanchéité (20) fabriqué à partir d'un matériau élastiquement déformable, et
un composant rigide (14) qui comprend une première portion s'étendant parallèlement à la vitre (12) et une seconde portion coudée à partir de la première portion ;
le joint (20) comprenant une portion d'étanchéité (21) fabriquée par extrusion et pourvue d'au moins une lèvre d'étanchéité (22, 24) et une portion de retenue (30) encadrant la vitre (12) et reliée par coopération matière avec la portion d'étanchéité (21) ;
la portion de retenue (30) étant pourvue d'un moyen de fixation (40) qui est relié à la première portion du composant rigide (14) ;
la portion d'étanchéité (21) comprenant une branche intérieure (26) sur laquelle est agencée la lèvre d'étanchéité (22, 24) et une branche extérieure (28) qui s'étend sous un angle par rapport à la branche intérieure (26) et qui est reliée à la portion de retenue (30) ;
la branche intérieure (26) formant une surface d'appui (27) par laquelle la portion d'étanchéité (21) prend appui contre la seconde portion du composant rigide (14),
**caractérisé en ce que** la portion de retenue (30) est armée par un insert (32) qui s'étend au moins le long de la première portion du composant rigide (14) et **en ce que** la portion d'étanchéité (21) est dépourvue de support de section transversale en forme de U.

2. Agencement d'étanchéité selon la revendication 1, **caractérisé en ce que** la portion de retenue (30) et le moyen de fixation (40) sont fabriqués séparément.

3. Agencement d'étanchéité selon la revendication 1 ou 2, **caractérisé en ce que** le moyen de fixation est un clip de fixation (40).

4. Agencement d'étanchéité selon l'une des revendications 1 à 3, **caractérisé en ce que** la portion de retenue (30) est pourvue d'une gorge (31) dans laquelle est mise en place la vitre (12).

5. Agencement d'étanchéité selon la revendication 4, **caractérisé en ce que** l'insert (32) est de section transversale approximativement en forme de Γ et entoure la gorge (31).

6. Agencement d'étanchéité selon l'une des revendications 1 à 5, **caractérisé en ce que** la portion d'étanchéité (21) est armée par un support qui est de préférence en forme de I ou de L.

7. Agencement d'étanchéité selon l'une des revendications 1 à 6, **caractérisé en ce que** la portion d'étanchéité (21) est pourvue d'une baguette-enjoliveur (33) dans la zone de la branche extérieure (28).

8. Agencement d'étanchéité selon l'une des revendications 1 à 7, **caractérisé en ce que** la lèvre d'étanchéité (22, 24) est pourvue d'un flocage (23, 25) ou d'un revêtement réduisant la friction.

9. Agencement d'étanchéité selon l'une des revendications 1 à 8, **caractérisé en ce que** la portion d'étanchéité (21) est extrudée d'un matériau élastomère, de préférence d'un élastomère thermoplastique ou de caoutchouc éthylène propylène diène.

10. Agencement d'étanchéité selon l'une des revendications 1 à 9, **caractérisé en ce que** la portion de retenue (30) est reliée par coulée par injection à la portion d'étanchéité (21).

11. Agencement d'étanchéité selon l'une des revendications 1 à 10, **caractérisé en ce que** la portion d'étanchéité (21) est incurvée en direction longitudinale.
